Europäisches Patentamt

(19) European Patent Office

Office européen des brevets

(11) Publication number: **0 328 311**
**A2**

(12) # EUROPEAN PATENT APPLICATION

(21) Application number: **89301043.9**

(22) Date of filing: **03.02.89**

(51) Int. Cl.⁴: **B 60 N 1/12**

(30) Priority: **11.02.88 GB 8803153**

(43) Date of publication of application:
**16.08.89 Bulletin 89/33**

(84) Designated Contracting States: **DE FR GB IT**

(71) Applicant: **BSRD LIMITED**
**Byron Street**
**Carlisle Cumbria CA2 5TD (GB)**

(72) Inventor: **Nicod, Frederick Charles**
**Willowbank**
**Low Row Cumbria CA8 2ND (GB)**

(74) Representative: **Kelvie, George Thomas**
**G.T. Kelvie & Co. The Victoria Suite 3rd Floor Northern**
**Assurance Buildings Albert Square**
**Manchester M2 4DN (GB)**

(54) **A Childs Vehicle safety seat.**

(57) A child's vehicle safety seat (10) is held in position on vehicle seat by means of an adult safety belt (30). In order to prevent relative movement between the safety belt (30) and the seat (10) a portion (30C) of the seat belt (30), is clamped to frame (14) by a clamp member (40) having an external eccentric surface (40A). The clamp member (40) is mounted on a frame member (16A, 16B) and the seat belt portion (30C) passes between the clamp member (40) and another frame member (24A).

Alternatively, the clamp member (40) can be monted on one of the frame portions (24A).

FIG.1

EP 0 328 311 A2

Bundesdruckerei Berlin

**Description**

# A CHILD'S VEHICLE SAFETY SEAT

This invention relates to a safety seat for use by children in a vehicle, such as a car.

Vehicle safety seats for children usually comprise a seat portion attached to a frame, and an adult seat belt of the vehicle is used to secure the frame, and thus the safety seat in position on a seat of the vehicle.

In the case where the adult safety belt is of the inertia reel type, which is the most usual nowadays, the above form of securing the safety set in place is sufficient to restrain the seat and occupant in the event of an accident. However, under certain types of loading, such as sideways loads experienced when the vehicle is decelerating rapidly, but not sufficiently rapidly for the inertia reel to lock the adult safety belt, there will tend to be relative movement between the safety seat and the adult seat belt.

The present invention seeks to provide a child's vehicle safety seat, having means to prevent relative movement between the adult safety belt and the child's vehicle safety seat.

A known form a device for preventing relative movement between an adult safety belt and a child's safety seat is shown in EP0200411. This device comprises a clamp attached to the frame of the safety seat and including a slot to receive a length of the adult seat belt, and rocking wedge which allows the belt to be pulled through the slot in one direction, but to lock the belt to the seat frame if the load is applied to the seat belt in the opposite direction.

The device requires the manufacture of a special clamp including a wedge which has to be attached to the safety seat frame.

Another known form of clamp for the same purpose is shown in DE3505009. The clamp comprises a bracket attached to a safety seat frame, and an eccentrically located lever mounted on a pin secured to the bracket. A length of an adults safety belt is arranged to pass through a slot defined by the bracket and the lever. The lever can be moved either to clamp the belt length in the bracket or release to allow the belt length to move relative to the seat frame.

Again. such device requires the manufacture of special clamp which has to be secured to the safety seat frame.

The present invention seeks to provide a safety seat having a clamping arrangement which is relatively easy to manufacture and assemble upon the safety seat frame, and which is progressive in operation on the application of tension to the adult safety belt.

Accordingly, the present invention provides a child's vehicle safety seat, the seat including a frame, and a seat portion attached to the frame, the seat being securable to an adult seat in the vehicle by a safety belt of the vehicle, the seat including a webbing clamp engageable with a portion of the safety belt to prevent relative movement between the safety belt and the frame, the webbing clamp comprising first and second frame portions and a clamp member rotatably mounted on one of said frame portions, a portion of the safety belt being able to pass between the clamp member and the other one of said frame portions, the clamp member having an external surface progressively engageable with the safety belt upon rotation of the clamp member on the said frame portion.

The clamp member can have a circular external surface with an eccentric circular bore.

The external surface of the clamping member can be continuous or discontinuous. In the case where the circular external surface is discontinuous, it is preferrred that the surface comprises an arc greater than 180° in extent.

The external surface of the clamping member can be roughened to increase the grip between the clamping member and the safety belt, and the clamping member can have biassing means such as a spring to urge the clamping member in a pre-determined direction.

The clamping member can also have a stop to prevent further movement of the clamping member in a pre-determined direction.

The clamping member can have a handle to enable the clamping member to be rotated on the frame relatively easily.

The present invention will now be more particularly described with reference to the accompanying drawings in which,

Fig. 1 shows a perspective view from an outboard position of one form of the child's safety seat according to the present invention,

Fig. 2 shows a perspective view of the safety seat shown in Fig. 1 from an inboard position,

Fig. 3 shows a part of the frame of the child's vehicle safety seat shown in Figs. 1 and 2 illusrating the webbing clamp in greater detail,

Fig. 4 shows a section on line 4-4 in Fig. 3,

Fig. 5 shows a section similar to that shown in Fig. 4,

Fig. 6 shows a further section similar to that shown in Fig. 4 and,

Fig. 7 shows an alternative form of webbing clamp for a child's vehicle safety seat according to the present invention to that shown in Figs. 3-6.

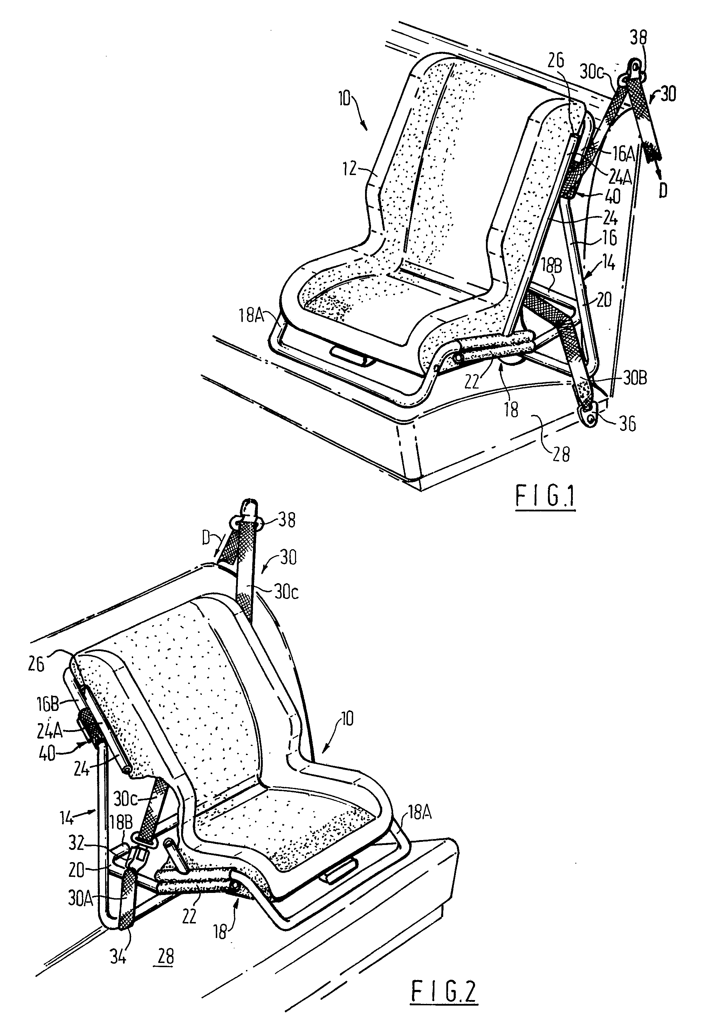

Referring to Figs. 1 and 2, a child's vehicle safety seat 10 comprises a seat portion 12 secured to a frame 14. The seat portion 12 can be movable by a mechanism (not shown) between upright and reclined positions.

The frame 14 comprises a back portion 16 and base portion 18 which are attached together by bolts or by welding at locations 20. In the arrangement shown, the base portion 18 comprises front and rear portions 18A and 18B, which are attached together by welding or bolting and covered by a sleeve 22 to screen the reclining mechanism.

The base and back portions 18 and 20 are also secured together by two side braces 24, which extend between and are attached to the back and base portions.

Upper portions 16A and 16B of the back portion 16 are parallel to upper portions 24A of each brace 24, each brace 24 being attached to the back frame portion at location 26.

The child's safety seat 10 is shown secured in position on a vehicle seat 28, with the lower end of the base frame portion 18A and the lower portion of the back frame 20 resting on the seat 28.

The seat 10 is held in position by an adult seat belt 30 having a short length 30A terminating in a webbing buckle 32 attached to an inboard anchorage 34. The seat belt 30A has a lap portion 30B attached to a outboard anchorage 36 and the lap portion 30B is continuous with a diagonal portion 30C which passes through a running loop 38 and down to an inertia reel (not shown).

The seat 10 is held in position by the short length 30A, and the lap portion 30B passing over the base portion 18 of the frame, and the diagonal portion 30C of the seat belt 30 is arranged to pass between either one of the upper portions 16A and 16B of the back portion of the frame and the upper portion 24A of one of the brace 24.

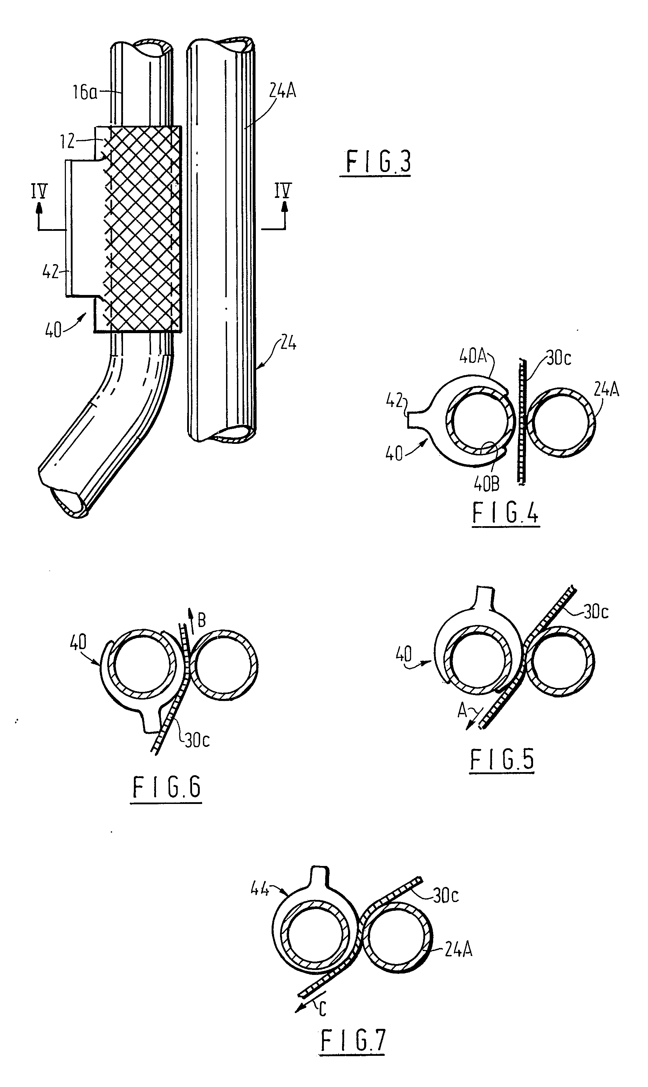

The diagonal portion 30C of the seat belt is held in position relative to the seat frame 14 by means of a webbing clamp, described in more detail with reference to Figs. 4-6, and Fig.7.

Referring to Figs. 3 and 4, the portions 16A and 24A of the seat 10 are shown to an enlarged scale. A clamping member 40 having a handle 42 is rotably mounted on the first frame portion 16A, and the diagonal portion 30C of the adult safety belt is arranged to pass between the portions 16A and 24A.

The clamping member 40 has a roughened external circular surface 40A, and the circular bore 40B, which is eccentric with respect to the external surface 40A.

The external circular surface 40A is discontinuous, but has an arc greater than 180°, for example, approximately 270°, enabling the clamping member to be snapped over the frame portion 16A which is circular in section. Such an arrangement allows the clamping member to be easily assembled upon the safety seat frame 14.

It will be appreciated that because the circular surface 40A and the circular bore 40B are eccentric with respect to one another, on rotation of the clamping member 40 on the frame portion 16A, the surface 40A comes into progressive engagement with the seat belt portion 30C, as shown in Fig. 5. In this arrangement when the safety seat is secured in position by the adult seat belt, the tension in the belt portion 16 is in direction of arrow A, and this tension tends to further rotate the clamping member 40, to increase the clamping force between the clamping member and the seat belt portion.

Should the tension be applied in the opposite direction, as indicated by arrow B in Fig. 6, the clamping member is rotated in the opposite direction so that the same effect of increasing the clamping load by the tension in the seat belt portion can be obtained.

In the alternative arrangement shown in Fig. 7, the external surface of a modified clamping member 44, is not discontinuous, and the first frame portion 10A will require a free end to enable the clamping member 12 to be assembled upon the first frame portion. Alternatively, the clamping member can be positioned on the tubing of the back frame 14 prior to the tubing being bent to shape.

In this arrangement the operation of the clamping member is identical with that shown in Figs. 2, 3 and 4, and the tension in the direction arrow C is tending to rotate the clamping member to increase the clamping load between the clamping member and the second frame portion 24A.

The child's safety seat 10 is secured to the vehicle seat 28 by the adult seat belt 30, by first passing the lap portion 30B over the base 18 which will draw out the seat belt from the inertia reel, and the running clip on the lap and diagonal portion 30B, 30C engages the buckle 32, so that the short length 30A also passes over the base 18. Tension is then applied to the diagonal portion 30C in the direction of arrow D (Figs. 1 and 2), and the clamping member 40 or 44 is operated to clamp the now tensioned diagonal portion 30C between the frame portions 16A and 16B and the brace portions 24A. The lap portion 30B and part of the diagonal portion 30C will now be tensioned independently of the tension applied by the inertia reel.

As shown in Figs. 1 and 2, the clamping member 40 can be provided on either side of the safety seat so that the adult seat belt on either the near side or the off side of the vehicle can be used to secure the seat in position. The clamping member has been shown positioned on either of the frame portions 16A or 16B, but it can be positioned on either of the brace portions 24A.

A child's vehicle safety seat in accordance with the invention provides a means of clamping an adult safety belt to the frame of the safety seat in a relatively simple and quick manner. In particular, the adult safety belt is freely movable with respect to the safety seat frame, until the clamping member is operated, after which the clamping member holds the safety belt against movement in either direction.

The clamping member can include biasing means such as a spring to ensure that the clamp is rotated in the correct direction. Further a stop can be provided to prevent the clamping member being rotated in the incorrect direction, that is a direction in which the tension in the adult safety belt tends to reduce the clamping load exerted by the clamping member on the safety belt.

## Claims

1. A child's vehicles safety seat, the seat including a frame and a seat portion attached to the frame, the seat being securable to an adult seat of a vehicle by an adult safety belt of the vehicle, the seat including a webbing clamp engageable with a proportion of the safety belt to prevent relative movement between the safety belt and the seat frame in one direction but allowing relative movement in the opposite direction, the webbing clamp comprising first

EP 0 328 311 A2

and second frame portions (16A, 16B; 24A), and a clamp member (40) rotatably mounted on one of said members (16A, 16B; 24A), a portion (30C) of a safety belt (30) being able to pass between the clamp member (40) and one of the frame portions (16A, 16B; 24A), the clamp member (40) having an external surface progressively engagable with the safety belt portion (30C) upon rotation of the clamp member (40) on one of said frame portions (16A, 16B; 24A).

2. A child's vehicle safety seat as claimed in claim 1, in which the clamp member (40) has a generally circular external surface (40A) and circular bore (40B) which is eccentric with respect to the external surface (40A).

3. A child's vehicle safety seat as claimed in claim 2, in which the external surface (40A) of the clamp member (40) is continuous.

4. A child's vehicle safety seat as claimed in claim 2, in which the clamp member (40) has a longitudinal slot of a width such that the arc of the external surface (40A) and the bore (40B) is greater than 180°, enabling the clamp member (40) to be snapped over and be retained upon one of the frame portions (16A, 16B; 24A).

5. A child's vehicle safety seat as claimed in claim 4, in which the arc of the external surface (40A) of the clamp member (40) is approximately 270°.

6. A child's vehicle safety seat as claimed in any one of the preceeding claims, in which the clamp member (40) has biassing means to urge the clamp member (40) into clamping engagement with the seat belt portion (30C).

7. A child's vehicle safety seat as claimed in any one of the preceeding claims, in which the clamp member (40) has a stop to prevent movement of the clamp member (40) in a direction opposite to the clamping direction.

8. A child's vehicle safety seat as claimed in any one of the preceeding claims, in which the external surface (40A) of the clamp member (40) is roughened.

9. A child's vehicle safety seat as claimed in any one of the preceeding claims, in which the clamp member (40) has a handle (42).

10. A child's vehicles safety seat as claimed in any one of the preceeding claims, in which the clamp member (40) is located on one of the frame members (16A, 16B) and the seat belt portion (30C) is located between the clamp member (40) and one of the frame portions (24A).

4

FIG.1

FIG.2

F I G.3

F I G.4

F I G.6

F I G.5

F I G.7